# EUROPÄISCHE PATENTANMELDUNG

(11) **EP 2 236 236 A1**
(43) Veröffentlichungstag der Anmeldung: **06.10.2010**
(21) Anmeldenummer: 09004999.0
(22) Anmeldetag: 03.04.2009
(51) Int. Cl.: B23K 15/00, B23K 26/34, B23K 28/00, C23C 26/00, F01D 25/24

(54) **Verfahren zur Schweissherstellung eines grossdimensionierten Bauteils aus Sphäroguss unter Verwendung von auftraggeschweissten Puffermaterialien**

(71) Anmelder: Siemens AG, Wittelsbacher Platz 2 80333 München (DE)
(72) Erfinder: Brussk, Stefan, 45479 Mülheim an der Ruhr (DE); Grüger, Birgit, 44329 Dortmund (DE); Kretschmer, Michael, Dr., 52072 Aachen (DE); Niepold, Karsten, 45481 Mülheim an der Ruhr (DE); Sheng, Shilun, Dr., 46149 Oberhausen (DE); Wilhelm, Claus, Dr., 47807 Krefeld (DE)

(57) **Zusammenfassung**

Ein Verfahren zur Herstellung eines Bauteils aus Sphäroguss weist die Schritte auf: Konstruktion des Bauteils (1) derart, dass das Bauteil (1) aus einer Mehrzahl an Bauteilkomponenten (2,3) zusammengesetzt ist, die unter Ausbilden von Teilfugen (8) aneinandergelegt sind sowie so dimensioniert und gestaltet sind, dass sie ohne kritische Fehlstellen in ihrem Material aus Späroguss gießbar sind; Herstellen der Bauteilkomponenten (2,3) aus Sphäroguss; paarweises Bereitstellen der Bauteilkomponenten (2,3), wobei eine erste der Bauteilkomponenten (2) und eine zweite der Bauteilkomponenten (3) zum benachbarten Aneinanderliegen vorgesehen sind, bei dem von einer Randkante (6) eines Randabschnitts (4) der ersten Bauteilkomponente (2) und einer Randkante (7) eines Randabschnitts (5) der zweiten Bauteilkomponente (3) eine der Teilfugen (8) gebildet wird; Auftragen von Puffermaterial auf die Randkante der ersten Bauteilkomponente (2) und auf die Randkante der zweiten Bauteilkomponente (3) durch Auftragsschweißen; Anlegen der zweiten Bauteilkomponente (3) mit ihrem Randabschnitt (5) an den Randabschnitt (4) der ersten Bauteilkomponente (2), so dass die Randkanten mit ihren Puffermaterialien aneinander liegen; Verschweißen der Randabschnitte (4,5), so dass die von den Randabschnitten (4,5) gebildete Teilfuge (8) verschweißt ist und dadurch die erste und die zweite Bauteilkomponente (2,3) miteinander befestigt sind, wodurch die erste und die zweite Bauteilkomponente (2,3) zumindest teilweise das Bauteil (1) bilden; wobei das Puffermaterial derart gewählt ist, dass beim Verschweißen der Randabschnitte (4,5) eine Strukturveränderung im Sphärogussmaterial der Bauteilkomponenten (2,3) unterbunden ist.

## Beschreibung

Die Erfindung betrifft ein Verfahren zur Herstellung eines groß dimensionierten Bauteils aus Sphäroguss.

Sphäroguss ist ein Gusseisen mit Kugelgraphit, mit dem kostengünstig serienmäßig groß dimensionierte Bauteile hergestellt werden können. Beispielsweise ist herkömmlich das Gehäuse einer Dampfturbine aus Sphäroguss gefertigt. Die geometrischen Ausmaße einer Dampfturbine im oberen Leistungsbereich, wie sie beispielsweise in Dampfkraftwerken zur Stromerzeugung eingesetzt werden, sind jedoch so groß, dass beim Gießen des Sphäroguss Probleme auftreten können. So ist beispielsweise die Wahrscheinlichkeit hoch, dass in einem derartigen Dampfturbinengehäuse Unregelmäßigkeiten und Fehlstellen auftreten, die die Festigkeit des Dampfturbinengehäuses beeinträchtigen. Diese Unregelmäßigkeiten und Fehlstellen können je nach Lage in dem Bauteil und Funktion der betroffenen Stellen nicht tolerabel sein. Dadurch ist die maximal zulässige Größe der Gehäusebauteile aus Sphäroguss nach oben begrenzt. Abhilfe würde ein Gehäusebauteil schaffen, das aus mehreren kleinen, gießtechnisch unkritischen Teilen zusammengesetzt ist. Voraussetzung hierfür wäre allerdings, dass diese Teile miteinander verschweißt ein Gehäuse bilden können. Die Teile wären über großflächige Schweißverbindungen miteinander zu verbinden, wofür ein geeignetes Schweißverfahren notwendig wäre. Allerdings ist kein Fertigungsverfahren bekannt, mit dem derart großflächige Schweißverbindungen von Sphäroguss hergestellt werden können.

In aus Sphäroguss hergestellten Gussbauteilen treten in der Regel immer Unregelmäßigkeiten und Fehlstellen auf. Von der Größe und der Lage der Unregelmäßigkeiten und Fehlstellen hängt es ab, ob das betroffene Gussbauteil als Ausschuss verworfen werden muss. Für kleine lokale Fehlstellen sind Reparaturschweißverfahren bekannt. Ein derartiges Reparaturschweißverfahren ist beispielsweise Kaltschweißen mit einer Eisen-Nickel-Legierung. Bei dem Kaltschweißverfahren wird jedoch eine Schweißverbindung hergestellt, deren Festigkeit unterhalb der Festigkeit des Sphäroguss liegt. Daher ist das Kaltschweißverfahren für großflächige Verbindungsschweißungen nicht geeignet. Ein anderes Verfahren ist Warmschweißen, das jedoch nur bei einer Bauteilvorwärmung im Bereich von 500°C bis 600°C und eine daran anschließende Wärmenachbehandlung durchführbar ist. Das Warmschweißen ist daher sehr aufwändig und erzeugt einen Verzug des Bauteils, so dass das Warmschweißen für eine großflächige Verbindungsschweißung von Sphäroguss nicht geeignet ist.

Aufgabe der Erfindung ist es, ein Verfahren zur Herstellung eines Bauteils aus Sphäroguss zu schaffen, wobei das Bauteil große Ausmaße und dennoch eine hohe Festigkeit hat.

Das erfindungsgemäße Verfahren zur Herstellung eines Bauteils aus Sphäroguss weist die Schritte auf: Konstruktion des Bauteils derart, dass das Bauteil aus einer Mehrzahl an Bauteilkomponenten zusammengesetzt ist, die unter Ausbilden von Teilfugen aneinandergelegt sind sowie so dimensioniert und gestaltet sind, dass sie ohne kritische Fehlstellen in ihrem Material aus Sphäroguss gießbar sind; Herstellen der Bauteilkomponenten aus Sphäroguss; paarweises Bereitstellen der Bauteilkomponenten, wobei eine erste der Bauteilkomponenten und eine zweite der Bauteilkomponenten zum benachbarten Aneinanderliegen vorgesehen sind, bei dem von einer Randkante eines Randabschnitts der ersten Bauteilkomponente und einer Randkante eines Randabschnitts der zweiten Bauteilkomponente eine der Teilfugen gebildet wird; Auftragen von Puffermaterial auf die Randkante der ersten Bauteilkomponente und auf die Randkante der zweiten Bauteilkomponente durch Auftragsschweißen; Anlegen der zweiten Bauteilkomponente mit ihrem Randabschnitt an den Randabschnitt der ersten Bauteilkomponente, so dass die Randkanten mit ihren Puffermaterialien aneinander liegen; Verschweißen der Randabschnitte, so dass die von den Randabschnitten gebildete Teilfuge verschweißt ist und dadurch die erste und die zweite Bauteilkomponente miteinander befestigt sind, wodurch die erste und die zweite Bauteilkomponente zumindest teilweise das Bauteil bilden; wobei das Puffermaterial derart gewählt ist, dass beim Verschweißen der Randabschnitte eine Strukturveränderung im Sphärogussmaterial der Bauteilkomponenten unterbunden ist.

Somit ist das Bauteil aus den mehreren Bauteilkomponenten gebildet, wobei in den Bauteilkomponenten unakzeptable Unregelmäßigkeiten und Fehlstellen im Sphäroguss unterbunden sind. Dadurch ist bei der Konstruktion des Bauteils prinzipiell aufgrund der Verwendung des Sphäroguss keine Obergrenze hinsichtlich der Festigkeit des Bauteils gesetzt. Als Strukturveränderung sind insbesondere Aufhärtungen in der Wärmeeinflusszone sowie die Zerstörung der Grundwerkstoffmatrix durch hohe Wärmeeinbringung zu verstehen.

Erfindungsgemäß werden die Bauteilkomponenten in einem Zweistufenschweißprozess zusammengefügt, wobei zuerst auf die als Schweißnahtflanken vorbereiteten Randkanten das Puffermaterial aufgetragen wird. Das Puffermaterial hat einen hohen Nickelgehalt und ist an den Sphäroguss sowie an das Verfahren zum Verschweißen der Randabschnitte angepasst. Durch den Zweistufenprozess ist eine großflächige Verbindungsschweißung von den Sphärogussbauteilen ermöglicht. Diese Schweißverbindung hat mechanische Eigenschaften, die vorteilhaft denen des Sphäroguss ähnlich sind. Dadurch kann das Bauteil groß dimensioniert sein, wobei das Bauteil aus kleinen, gießtechnisch unkritischen Bauteilkomponenten aufgebaut ist. Somit ist die Wahrscheinlichkeit von unakzeptablen Unregelmäßigkeiten und Fehlstellen in dem Bauteil gering und die Baubarkeit von dem groß dimensionierten Bauteil ermöglicht.

Das erfindungsgemäße Verfahren kann außerdem für eine Reparatur des Bauteils verwendet werden, indem von dem Bauteil ein beschädigter Abschnitt herausgetrennt wird und durch einen neuen Abschnitt ersetzt wird. Der neue Abschnitt wird unter Anwendung des erfindungsgemäßen Verfahrens in das bestehende Bauteil eingeschweißt.

Das Puffermaterial wird bevorzugt nickelhaltig und/oder mehrschichtig aufgetragen. Dadurch entsteht ein Anlasseffekt der jeweils vorherig aufgetragenen Schicht bzw. der Wärmeeinflusszone im Werkstoff der Bauteilkomponente. Für das Auftragsschweißen wird bevorzugt ein Laser-Pulver-Auftragsschweißverfahren verwendet. Besonders bevorzugt ist es, dass für das Auftragsschweißen des Puffermaterials an die erste Bauteilkomponente ein Laser-Pulver-Auftragsschweißverfahren und für das Auftragsschweißen des Puffermaterials an die zweite Bauteilkomponente ein energiearmes Schutzgasschweißverfahren derart verwendet werden, dass keine Wärmeeinflusszone an den Randabschnitten entsteht. Dadurch kann auf die Bauteilkomponente das Puffermaterial mit einer minimalen Beeinflussung des Werkstoffs der Bauteilkomponente aufgetragen werden, wodurch vorteilhafte mechanische Eigenschaften in der Wärmeeinflusszone der Auftragsschweißung des Pulvermaterials erzielt sind.

Beim Verschweißen der Randabschnitte wird bevorzugt ein Schweißverfahren mit hoher Einschweißtiefe und schmalem Schweißbad sowie kleiner Wärmeeinflusszone verwendet. Bevorzugt ist das Schweißverfahren ein Elektronenstrahlschweißverfahren. Die Stärke des Pulvermaterials und die Parameter des Elektronenstrahlschweißverfahrens sowie des Laser-Pulver-Auftragschweißverfahrens werden bevorzugt derart gewählt, dass die Wärmeeinflusszone der Verschweißung durch das Elektronenstrahlschweißverfahren in dem Pulvermaterial angeordnet ist.

Im Folgenden wird eine bevorzugte Ausführungsform eines mit dem erfindungsgemäßen Verfahren hergestellten Bauteils anhand der beigefügten schematischen Zeichnungen erläutert.

Es zeigen:
- Fig. 1: eine perspektivische Ansicht einer erfindungsgemäßen Ausführungsform des Bauteils,

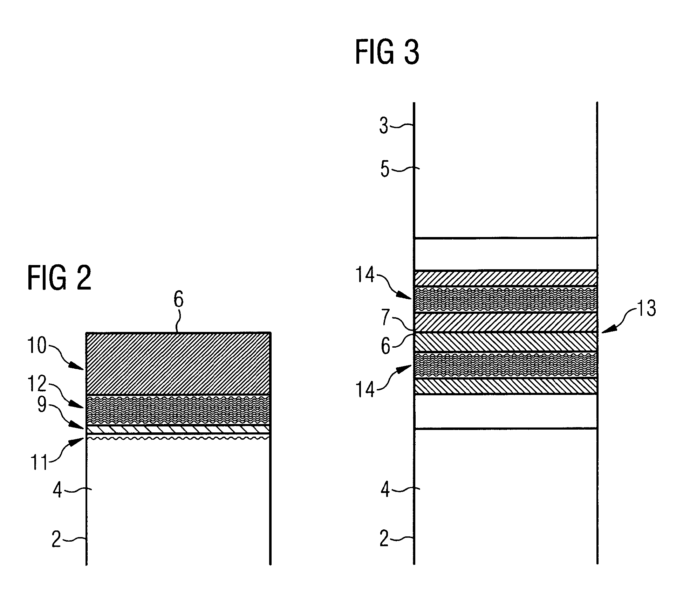

- Fig. 2: einen Querschnitt durch einen Randabschnitt einer ersten Bauteilkomponente des Bauteils nach einem ersten Herstellungsschritt und
- Fig. 3: einen Querschnitt der Randabschnitte der ersten Bauteilkomponente und einer zweiten Bauteilkomponente des Bauteils nach einem zweiten Herstellungsschritt.

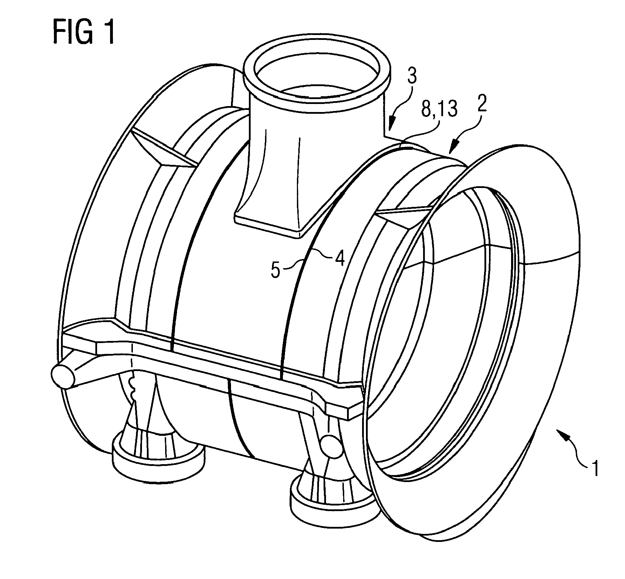

Wie es aus Fig. 1 ersichtlich ist, ist ein Bauteil als ein Dampfturbinen-Niederdruck-Innengehäuse 1 gezeigt. Das Gehäuse 1 setzt sich zusammen aus mehreren Bauteilkomponenten, insbesondere einer ersten Bauteilkomponente 2 und einer zweiten Bauteilkomponente 3. Die Bauteilkomponenten 2, 3 sind aneinander gelegt und bilden eine Teilfuge 8 aus. Ferner sind die Bauteilkomponenten 2, 3 so dimensioniert und gestaltet, dass sie ohne kritische Fehlstellen in ihrem Material aus Sphäroguss herstellbar sind.

Die erste Bauteilkomponente 2 weist einen Randabschnitt 4 auf, der unmittelbar benachbart neben einem Randabschnitt 5 der zweiten Bauteilkomponente 3 angeordnet ist. Der Randabschnitt 4 der ersten Bauteilkomponente 2 ist von einer Randkante 6 begrenzt, die stumpf an einer Randkante 7 anliegt, die den Randabschnitt 5 der zweiten Bauteilkomponente 3 begrenzt. Dadurch ist die Teilfuge 8 von den Randkanten 6, 7 gebildet.

Beim Herstellen des Gehäuses 1 werden die erste Bauteilkomponente 2 und die zweite Bauteilkomponente 3 separat in einem Sphärogussverfahren aus Sphäroguss hergestellt. Dabei ist die Gefahr gering, dass sich in den Bauteilkomponenten 2, 3 kritische Fehlstellen ausbilden. In einem ersten Fertigungsschritt wird die erste Bauteilkomponente 2 bereitgestellt. Auf ihre Randkante 6 wird eine erste Pulvermaterialschicht 9 mit einem Laser-Pulver-Auftragsschweißverfahren aufgetragen. Danach wird auf die erste Pulvermaterialschicht 9 eine zweite Pulvermaterialschicht 10 durch das Laser-Pulver-Auftragsschweißverfahren aufgebracht. Die Wärmeeinflusszone 11 der ersten Pulvermaterialschicht 9 ist in dem Randabschnitt 4 der ersten Bauteilkomponente 2 angeordnet. Die Wärmeeinflusszone 12 der zweiten Pulvermaterialschicht 10 ist in der ersten Pulvermaterialschicht 9 angeordnet. Die Randkante 7 des Randabschnitts 5 der zweiten Bauteilkomponente 3 wird ebenfalls wie die Randkante 6 mit einer ersten Pulvermaterialschicht 9 und einer zweiten Pulvermaterialschicht 10 versehen. In einem zweiten Fertigungsschritt werden die Bauteilkomponenten 2 und 3 mit ihren Randabschnitten 4 und 5 aneinander gelegt, so dass die Teilfuge 8 sich ausbildet. Die Teilfuge 8 wird mit einer Elektronenstrahlschweißnaht 13 verschweißt, wobei die Wärmeeinflusszonen 14 der Elektronenstrahlschweißnaht 13 in den Puffermaterialschichten angeordnet ist.

## Patentansprüche

1. Verfahren zur Herstellung eines Bauteils aus Sphäroguss, mit den Schritten:
Konstruktion des Bauteils (1) derart, dass das Bauteil (1) aus einer Mehrzahl an Bauteilkomponenten (2, 3) zusammengesetzt ist, die unter Ausbilden von Teilfugen (8) aneinandergelegt sind sowie so dimensioniert und gestaltet sind, dass sie ohne kritische Fehlstellen in ihrem Material aus Späroguss gießbar sind;
Herstellen der Bauteilkomponenten (2, 3) aus Sphäroguss; paarweises Bereitstellen der Bauteilkomponenten (2, 3),
wobei eine erste der Bauteilkomponenten (2) und eine zweite der Bauteilkomponenten (3) zum benachbarten Aneinanderliegen vorgesehen sind, bei dem von einer Randkante (6) eines Randabschnitts (4) der ersten Bauteilkomponente (2) und einer Randkante (7) eines Randabschnitts (5) der zweiten Bauteilkomponente (3) eine der Teilfugen (8) gebildet wird; Auftragen von Puffermaterial (9, 10) auf die Randkante (6) der ersten Bauteilkomponente (2) und auf die Randkante (7) der zweiten Bauteilkomponente (3) durch Auftragsschweißen; Anlegen der zweiten Bauteilkomponente (3) mit ihrem Randabschnitt (5) an den Randabschnitt (4) der ersten Bauteilkomponente (2), so dass die Randkanten (6, 7) mit ihren Puffermaterialien (9, 10) aneinander liegen;
Verschweißen der Randabschnitte (4, 5), so dass die von den Randabschnitten (4, 5) gebildete Teilfuge (8) verschweißt ist und **dadurch** die erste und die zweite Bauteilkomponente (2, 3) miteinander befestigt sind, wodurch die erste und die zweite Bauteilkomponente (2, 3) zumindest teilweise das Bauteil (1) bilden, wobei das Puffermaterial (9, 10) derart gewählt ist, dass beim Verschweißen der Randabschnitte (4, 5) eine Strukturveränderung im Sphärogussmaterial der Bauteilkomponenten (2, 3) unterbunden ist.

2. Verfahren gemäß Anspruch 1,
wobei das Puffermaterial (9, 10) nickelhaltig und/oder mehrschichtig aufgetragen wird.

3. Verfahren gemäß Anspruch 1 oder 2,
wobei für das Auftragsschweißen ein Laser-Pulver-Auftragsschweißverfahren verwendet wird.

4. Verfahren gemäß Anspruch 1 oder 2,
wobei für das Auftragsschweißen des Puffermaterials (9) an die erste Bauteilkomponente (4) ein Laser-Pulver-Auftragsschweißverfahren und für das Auftragsschweißen des Puffermaterials (10) an die zweite Bauteilkomponente (5) ein energiearmes Schutzgasschweißverfahren derart verwendet werden, dass keine Wärmeeinflusszone an den Randabschnitten (4, 5) entsteht.

5. Verfahren gemäß einem der Ansprüche 1 bis 4,
wobei beim Verschweißen der Randabschnitte (4, 5) ein Schweißverfahren mit hoher Einschweißtiefe und schmalem Schweißbad sowie kleiner Wärmeeinflusszone (14) verwendet wird.

6. Verfahren gemäß Anspruch 5,
wobei das Schweißverfahren ein Elektronenstrahlschweißverfahren (13) ist.

7. Verfahren gemäß Anspruch 6,
wobei die Stärke des Pulvermaterials und die Parameter des Elektronenstrahlschweißverfahrens sowie des Laser-Pulver-Auftragschweißverfahrens derart gewählt werden, dass die Wärmeeinflusszone (14) der Verschweißung (13) durch das Elektronenstrahlschweißverfahren in dem Puffermaterial (9, 10) angeordnet ist.
